# EUROPÄISCHE PATENTSCHRIFT

(11) **EP 2 287 780 B1**
(45) Veröffentlichungstag und Bekanntmachung des Hinweises auf die Patenterteilung: **03.10.2018**
(21) Anmeldenummer: 09010651.9
(22) Anmeldetag: 19.08.2009
(51) Int. Cl.: G06K 7/10

(54) **Verfahren, Vorrichtung zum Auslesen einer auf einem Bauteil angebrachten topografischen Struktur und Bauteil**
Method, device for reading out a topographical structure on a component and component
Procédé, dispositif de lecture d'une structure topographique appliquée sur un composant et composant

(43) Veröffentlichungstag der Anmeldung: 23.02.2011
(73) Patentinhaber: Carl Freudenberg KG, 69469 Weinheim (DE)
(72) Erfinder: Kritzer, Peter, 67147 Forst (DE); Bickel, Christian, 64646 Heppenheim (DE); Ewald, Kurt, 74405 Gaildorf (DE); Geubert, Christian, 64625 Bensheim (DE)

(56) Entgegenhaltungen:
- GB-A- 2 237 412
- JP-A- 10 282 063
- JP-A- 59 017 684

## Beschreibung

### Technisches Gebiet

Die Erfindung betrifft ein Verfahren zum Auslesen einer auf einem Bauteil angebrachten topografischen Struktur mit einem optischen Auslesegerät und eine Vorrichtung zur Durchführung des Verfahrens sowie das so modifizierte Bauteil.

### Stand der Technik

Aus der US 2006/0091214 A1 ist eine Vorrichtung zum Auslesen eines grafischen Codes bekannt. Die Vorrichtung umfasst eine Lichtquelle und Sensoren zum Erfassen des reflektierten Lichts. Zum Auslesen eines Codes wird die Lichtquelle auf ein Bauteil gerichtet, auf dessen Oberfläche der Code angebracht ist Auf der Oberfläche wird das Licht reflektiert und das reflektierte Licht wird durch die Sensoren erfasst. Je nach Ausgestaltung des Codes erfolgt entweder eine unterschiedliche Streuung des Lichts oder das Licht wird in einigen Bereichen des Codes reflektiert und in anderen Bereichen absorbiert. In beiden Fällen detektiert der Sensor einen unterschiedlichen Lichteinfall aus den Codeabschnitten, so dass der Code detektiert und berechnet werden kann. Neben zweidimensionalen Codes, beispielsweise aufgeklebten Barcodes, ist es auch denkbar den Code dreidimensional an dem Bauteil anzubringen. Dabei reicht der Code abschnittsweise und variierend in die Tiefe und es ergibt sich dabei eine topografische Struktur. Bekannt ist es beispielsweise mittels eines Lasers feine Strukturen in die Oberfläche des Bauteils zu brennen. Die Tiefe einer derartig erzeugten topografischen Struktur beträgt dabel typischerweise 10 bis 50 µm. Feine Strukturen sind immer dann notwendig, wenn auf eine bestimmte Fläche eine große Informationsmenge aufgebracht werden soll, oder aber, wenn diese Information redundant vorhanden sein soll, um z.B. die Information gegen Zerstörung zu sichem. Bei dieser Kennzeichnung ist insbesondere die verbesserte Fälschungssicherheit von Vorteil. Das Auslesen derartiger Codes erfolgt ebenfalls mittels einer Lichtquelle und Sensoren die das reflektierte Licht sensieren. Diese Kennzeichnung zeichnet sich auch dadurch aus, dass keinerlei Zusätze wie Farben Pigmente oder ähnliche Markierungsmittel notwendig sind. Der Code weist dieselbe Oberflächenbeschaffenheit auf, wie das Übrige Bauteil. Insbesondere bei glatten und gekrümmten Oberfächen ergibt jedoch sich das Problem, dass die durch die Sensoren empfangene Struktur kontrastarm sein kann. Dieses Problem ergibt sich insbesondere bei Strukturen, die auf gekrümmten Flächen angebracht sind. Bei besonders glatten und daher spiegelnden Oberflächen kann die Auslesung der kontrastarmen Struktur durch Lichtreflexe erschwert werden. Weitere Probleme resultieren in Schattenbildung bei gekrümmten Oberflächen. Hier kann es vorkommen, dass ein Teil der Struktur im abgeschatteten Bereich, ein anderer Teil hingegen im beleuchteten Bereich liegt, Auch bei Oberflächen, die an sich schon eine hohe Oberflächenrauhigkeit aufweisen und daher nicht splegeln, kann die Auslesung der Struktur erschwert sein. Dies ist immer dann der Fall, wenn die Strukturtiefe nicht sehr viel größer ist als die Rauhigkeit. Ein solcher Zustand führt ebenfalls zu einer kontrastarmen Struktur. GB 2 237 412 A bezieht sich auf ein Verfahren zur Erkennung der Umrisse und automatischen Ausrichtung eines Bauteils. Es betrifft eine automatische Nähmaschine, die mittels eines Kantenerkennungsverfahrens zugeschnittene Stoffteile automatisch positionieren kann. Das geschnittene Stück wird auf ein Förderband gelegt und in eine Kammer getragen. In der Kammer wird ein farbiges Pulver durch Düsen gesprüht. Ein Luftgebläse verwirbelt das Pulver weiter, bis es ein Stück gleichmäßig bedeckt, das dann von der Kammer auf dem Förderer getragen wird. Der Nähvorgang mit eingebauter Kantenerkennung erfolgt mit den beschichteten Teilen. Ausreichend Licht wird nun von der weißen Beschichtung reflektiert und die Kanten sind für eine regelmäßige Kantenerkennung sichtbar. Nach dem Nähvorgang wird das Pulver durch Luftblasen oder durch Bürsten mit weichen Bürsten oder einer anderen bekannten Methode entfernt. Dies kann in einer geschlossenen Kammer oder in jeder anderen gewünschten Weise erfolgen. JP 10-282063 A bezieht sich auf ein Verfahren zur Defekterkennung in ferromagnetischen Werkstoffen, bei dem die Defekte durch vollflächiges Aufsprühen fluoreszierender Magnetpartikel unter UV-Licht-Beobachtung sichtbar gemacht werden. JP 59-017684 A bezieht such auf eine Informationskarte, deren Information mittels eines Fluoreszenzfarbstoffs aufgebracht ist, wobei der Fluoreszenzfarbstoff bei der Herstellung der Informationskarte in Löchern manipulations- und zerstörungsgeschützt eingelagert und permanent verankert ist.

Die Dokumente GB-A-2257412, JP 10282043A, JP 59017684 A beschreiben Bauteile, welche keine topogrophische Struktur zur Codierung digitaler Information aufweisen.

### Darstellung der Erfindung

Der Erfindung liegt die Aufgabe zugrunde, das Verfahren zum Auslesen eines Codes der als eine auf einem Bauteil angebrachte topographische Struktur ausgebildet ist so zu verbessem, dass die Auslesegenauigkeit steigt.

Diese Aufgabe wird mit den Merkmalen von Anspruch 1, 10 und 13 gelöst. Auf vorteilhafte Ausgestaltungen nehmen die Unteransprüche Bezug.

Zur Lösung der Aufgabe wird zumindest der Bereich des Bauteils in dem die Struktur angeordnet ist vor dem Auslesen mit einem Mittel versehen durch das sich der Kontrast der Struktur verbessert Grundsätzlich wird ein Mittel gewählt welches reversibel auf das Bauteil aufgebracht wird und nach dem Auslesen wieder entfernt werden Kann. Das Entfernen soll dabei so einfach wie möglich. also durch Blasen oder Saugen oder durch Einsatz eines unproblematischen Lösemittels wie Wasser erfolgen. Dadurch bleibt die Struktur und die Beschaffenheit der Oberfläche des Bauteils unverändert. Diese Vorgehensweise ist insbesondere vorteilhaft, wenn lediglich eine Prozesskontrolle durchgeführt werden soll. Es ist jedoch auch denkbar, das Mittel irreversibel aufzubringen, so dass es in der Struktur verbleibt Dies ist insbesondere dann vorteilhaft, wenn das Bauteil nach der Produktion, beispielsweise unmittelbar vor der Montage, nochmals ausgelesen werden soll. Darüber hinaus können solche Bauteile unter Umständen auch nach der bestimmungsgemäßen Verwendung des Bautells, also nach dem Ausbau, ausgelesen werden. Des Weiteren kann das Mittel auch dazu verwendet werden, die Struktur selbst zu schützen und weitere Prozess-Schritte wie eine Oberflächenbehandlung zu vereinfachen. Durch das Mittel verändert sich das Reflexionsverhalten der Oberfläche, so dass sich der Kontrast der ausgelesenen Struktur und damit die Auslesegenauigkeit verbessert. Bevorzugt erfolgt die Veränderung das Reflexionsverhaltens durch erzeugen eines diffusen Reflexionsverhaltens der Oberfläche. Dadurch erscheint die Oberfläche matt und nicht mehr glänzend. Die detektierte Struktur weist dabei keine überhellen Abschnitte auf, die das Erkennen und Auslesen der Struktur erschweren.

Das Mittel kann ein Feststoff in Pulverform sein. Pulver lassen sich einfach applizieren und besonders einfach wieder entfernen. Dabei sind die Pulver so ausgestaltet, dass keine starke Anhaftung an das Bauteil erfolgt. Dabei kann das Mittel ein organisches Pulver sein. Derartige Pulver sind beispielsweise Mehl oder thermoplastische Pulver. Diese Pulver sind meist gesundheitlich unbedenklich. Des Weiteren weisen die zuvor genannten Pulver eine helle Farbe auf und sind dadurch insbesondere für dunkle Oberflächen geeignet. Das Mittel kann auch ein anorganisches Pulver sein. Derartige Pulver sind beispielsweise Quarzmehl, Talkum, Zinkum, Titan- oder Aluminiumoxid. Diese weisen ebenfalls meist eine helle Farbe auf und eignen sich insbesondere für dunkle Oberflächen. Ein Mittel mit dunkler Farbe, welches sich daher für helle Oberflächen eignet, ist Ruß. Die anorganischen Pulver einschließlich Ruß sind Materialien, die insbesondere in der Verarbeitung elastischer Bauteile häufig verwendet werden. Die Verwendung solcher Pulver-Materialien, die bereits in der Kautschuk-Mischung vorhanden sind, hat bei der Verwendung der Bauteile insbesondere für Applikationen in der Lebensmittelindustrie Vorteile, weil die Bauteile in der Regel dann keiner erweiterten Freigabe unterliegen. Elastische Bauteile sind beispielsweise Dichtungen, O-Ringe, Reifen, Förderbänder, Schläuche, Bälge, Membranen, schwingungsreduzierende Bauteile. Diese Bauteile bestehen meist aus einem elastomeren Werkstoff, wie Kautschuk und weisen meist eine dunkle, leicht glänzende oder matte Oberfläche auf. Des Weiteren sind die Oberflächen dieser Bauteile häufig gekrümmt. Durch das Mittel ergibt sich im Bereich der topografischen Struktur eine matte und kontrastreiche Oberfläche, so dass die Auslesegenauigkeit der Struktur durch die Sensoren verbessert ist. Sowohl die organischen als auch die anorganischen Pulver lassen sich einfach wieder von der Oberfläche entfernen. Das Mittel kann nach dem Auslesen mit Hilfe von Druckluft oder einer Saugvorrichtung wieder von dem Bauteil entfernt werden. Dadurch kann das Mittel ohne das Bauteil zu berühren wieder von diesem entfernt werden und das Bauteil kann unbeeinträchtigt seiner bestimmungsgemäßen Verwendung zugeführt werden.

Das Mittel kann eine Flüssigkeit sein. Flüssigkeiten lassen sich ebenfalls einfach applizieren, jedoch ist es je nach Ausgestaltung schwieriger, diese wieder von dem Bauteil zu entfernen. Des Weiteren kann im Gegensatz zu dem Pulver die Einhaltung einer Trocknungszeit erforderlich sein, durch die sich die Auslesezeit verlängert. Vorteilhaft bei einer Ausgestaltung des Mittels als Flüssigkeit ist jedoch, dass besonders kleine Partikel auf das Bauteil aufgebracht werden können, die das Reflexionsverhalten der Struktur besonders vorteilhaft beeinflussen. Dazu kann das Mittel als Suspension, Dispersion oder Lösung ausgebildet sein. Bei dieser Ausgestaltung verbleiben nach der Trocknung Partikel in der Struktur zurück.

Die Pulver oder die Partikel können dauerhaft in der Struktur fixiert werden. Hierzu können die Pulver zusammen mit einem Kleber oder Binder in einer Flüssigkeit dispergiert sein und in die Struktur eingebracht werden. Nach Trocknung sind die Pulver oder Partikel dann in der Struktur fixiert. Derartig fixierte Pulver oder Partikel weisen den Vorteil einer Erhöhung der Robustheit der Struktur gegenüber Zerstörung bei der Anwendung der Bauteile selbst auf. Darüber hinaus führt ein Versiegeln der Strukturen zu einer Verhinderung des Ansammelns von schädlichen Substanzen wie Keime in der Struktur. Des Weiteren können derartig ausgebildete Strukturen auch für Bauteile in Reinraumanwendungen eingesetzt werden, bei denen eine Freisetzung partikulärer Verunreinigungen unbedingt zu vermeiden ist. Ein weiterer Vorteil ergibt sich dann, wenn die Bauteile in einem weiteren Arbeitsschritt einer Oberflächenbehandlung, beispielsweise einem Coating, unterzogen werden sollen. Hierzu steht dann nach dem Versiegeln eine glatte, nicht durch die dreidimensionale Struktur beeinflusste Oberfläche zur Verfügung. Bevorzugt weist der Bereich der Struktur der mit dem Mittel versehen ist, eine vergleichbare Rauhigkeit wie die übrige Oberfläche des Bauteils auf. Des Weiteren ist denkbar, dass die topografische Struktur ein 2-dimensionaler Code ist.

Die Partikel können so ausgestaltet sein, dass sie fluoreszierend, phosphoreszierend oder UV-aktiv sind. So ausgestaltete Partikel lassen sich dann vereinfacht auslesen.

Die erfindungsgemäße Vorrichtung zum Auslesen einer auf einem Bauteil angebrachten topografischen Struktur nach dem zuvor beschriebenen Verfahren umfasst ein optisches Auslesegerät und eine Einrichtung zum Auftragen des Mittels. Bevorzugt erfolgt das Aufbringen des Mittels wie auch das Auslesen automatisiert, so dass neben einer kurzen Auslesezeit und einem hohen Durchsatz an auszulesenden Bauteilen eine gleichbleibende Qualität der Auftragsmenge des Mittels und damit eine gleichbleibende Oberflächenbeschaffenheit erreicht wird. Ferner kann eine weitere Einrichtung zum Entfernen des Mittels vorgesehen sein. Dabei erfolgt auch das Entfernen des Mittels aus den gleichen Gründen vorzugsweise automatisiert. Dazu kann die weitere Einrichtung eine Saug- oder Blaseinrichtung sein. In einer vorteilhaften Ausgestaltung ist die Vorrichtung bestehend aus Auslesegerät mit Lichtquelle und Sensoren, der Einrichtung zum Auftragen und der weiteren Einrichtung zum Entfernen als integrierte Einheit ausgebildet.

### Kurzbeschreibung der Zeichnung

Einige Ausführungsbeispiele des erfindungsgemäßen Verfahrens werden nachfolgend anhand der Figuren näher erläutert. Diese zeigen, jeweils schematisch:
Fig. 1 das Verfahren und die Vorrichtung mit einem pulverigen Mittel;
Fig. 2 das Verfahren und die Vorrichtung mit einem flüssigen Mittel.

### Ausführung der Erfindung

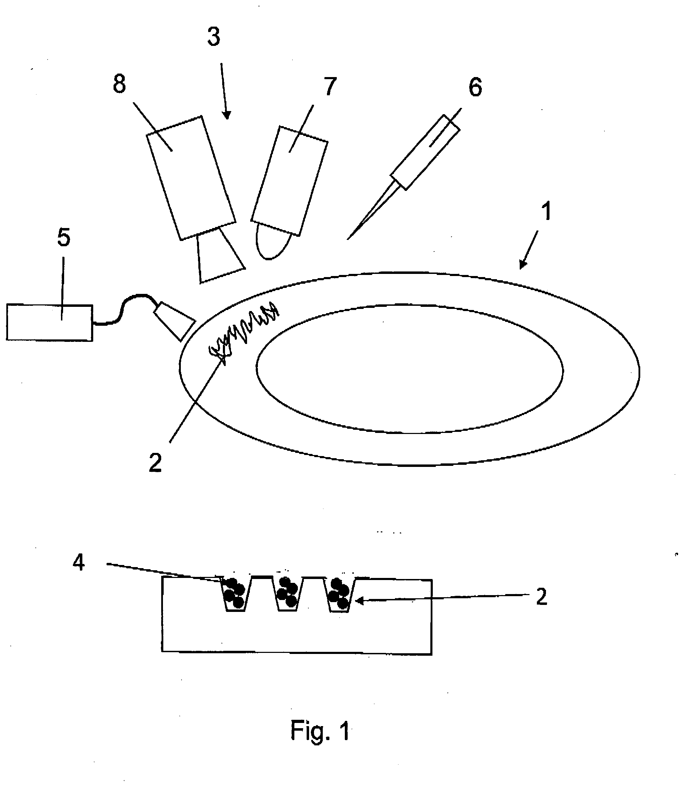

Figur 1 zeigt ein Vorrichtung zum Auslesen einer auf einem Bauteil 1 angebrachten topografischen Struktur 2 mit einem optischen Auslesegerät 3. Dabei besteht das Bauteil 1 aus einem elastomeren Werkstoff und die topografische Struktur 2 ist eine dreidimensionale Struktur, die mittels eines Lasers in das Bauteil 1 eingebracht wurde. Das optische Auslesegerät 3 umfasst eine Lichtquelle 7, beispielsweise eine LED und eine Sensoreinheit 8, die das von dem Bauteil 1 reflektiert Licht der Lichtquelle detektiert und dadurch die Struktur ausliest. Der Bereich des Bauteils 1 in dem die Struktur 2 angeordnet ist wird vor dem Auslesen mit einem Mittel 4 versehen durch das sich der Kontrast der Struktur 2 verbessert. Dazu umfasst die Vorrichtung zum Auslesen neben dem optischen Auslesegerät 3 eine Einrichtung 5 zum Auftragen des Mittels 4. In dieser Ausgestaltung ist das Mittel ein anorganisches Pulver. Nach dem Auslesen der Struktur 2 durch das Auslesegerät 3 wird das Mittel wieder von dem Bauteil 1 entfernt. Dazu ist in der Vorrichtung eine weitere Einrichtung 6 zum Entfernen des Mittels 4 vorgesehen. Dabei ist die weitere Einrichtung 6 eine Blaseinrichtung, durch die das Mittel 4 mittels Druckluft von dem Bauteil entfernt wird.

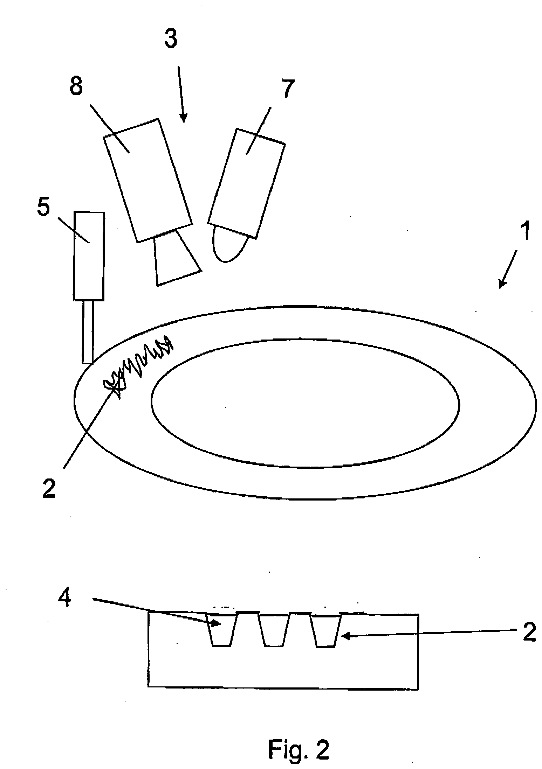

Figur 2 zeigt eine Vorrichtung gemäß Figur 1, wobei die Einrichtung 5 zum Auftragen des Mittels 4 in dieser Ausgestaltung so ausgestaltet ist, dass als Mittel 4 eine flüssige Lösung verwendet wird. Das Mittel 4 wird mittels eines Binders, einem Klebemittel, in der Struktur fixiert und verbleibt dort dauerhaft. Der Binder ist so ausgestaltet, dass das Mittel 4 mit der übrigen Oberfläche des Bauteils 1 vergleichbare Eigenschaften aufweist.

## Patentansprüche

1. Verfahren zur Verbesserung der Auslesegenauigkeit beim Auslesen eines Codes, der als eine auf einem Bauteil (1) angebrachte topographische Struktur (2) ausgebildet ist, mit einem optischen Auslesegerät (3), wobei die Struktur (2) vor dem Auslesen mit einem Mittel (4) versehen wird, durch das sich der Kontrast der Struktur (2) verbessert.

2. Verfahren nach Anspruch 1, **dadurch gekennzeichnet, dass** das Mittel (4) nach dem Auslesen des Codes wieder von dem Bauteil (1) entfernt wird.

3. Verfahren nach Anspruch 2, **dadurch gekennzeichnet, dass** das Mittel (4) nach dem Auslesen mit Hilfe von Druckluft oder einer Saugvorrichtung wieder von dem Bauteil (1) entfernt wird.

4. Verfahren nach einem der Ansprüche 1 bis 3, **dadurch gekennzeichnet, dass** das Mittel (4) ein Feststoff in Pulverform ist.

5. Verfahren nach einem der Ansprüche 1 bis 4, **dadurch gekennzeichnet, dass** das Mittel (4) ein organisches Pulver ist.

6. Verfahren nach einem der Ansprüche 1 bis 4, **dadurch gekennzeichnet, dass** das Mittel (4) ein anorganisches Pulver ist.

7. Verfahren nach Anspruch 1, **dadurch gekennzeichnet, dass** das Mittel (4) eine Flüssigkeit ist.

8. Verfahren nach Anspruch 7, **dadurch gekennzeichnet, dass** das Mittel (4) als Suspension, Dispersion oder Lösung ausgebildet ist.

9. Verfahren nach einem der Ansprüche 1, 4 bis 8, **dadurch gekennzeichnet, dass** das Mittel (4) dauerhaft in der Struktur (2) fixiert wird.

10. Vorrichtung zur Verbesserung der Auslesegenauigkeit beim Auslesen eines Codes, der als eine auf ein Bauteil (1) angebrachte topographische Struktur (2) ausgebildet ist, nach einem der vorherigen Ansprüche umfassend ein optisches Auslesegerät (3) und eine Einrichtung (5) zum Auftragen eines Mittels (4), durch das sich der Kontrast der Struktur (2) verbessert.

11. Vorrichtung nach Anspruch 10, **dadurch gekennzeichnet, dass** eine weitere Einrichtung (6) zum Entfernen des Mittels (4) vorgesehen ist.

12. Vorrichtung nach Anspruch 11, **dadurch gekennzeichnet, dass** die weitere Einrichtung (6) eine Saug- oder Blaseinrichtung ist.

13. Bauteil (1) mit einem Code, der als eine topografische Struktur (2) ausgebildet ist, **dadurch gekennzeichnet, dass** in der Struktur (2) ein Mittel (4) angeordnet ist, welches den Kontrast der Struktur (2) verbessert.

## Claims

1. Method for enhancing the read-out accuracy when reading out a code, which is configured as a topographical structure (2) applied to a component (1), with an optical read-out device (3), wherein, before the read-out, the structure (2) is provided with an agent (4), by virtue of which the contrast of the structure (2) is enhanced.

2. Method according to Claim 1, **characterized in that** the agent (4) is removed from the component (1) again after the code has been read out.

3. Method according to Claim 2, **characterized in that** the agent (4) is removed from the component (1) again with the aid of compressed air or a suction apparatus after the read-out.

4. Method according to one of Claims 1 to 3, **characterized in that** the agent (4) is a solid in powder form.

5. Method according to one of Claims 1 to 4, **characterized in that** the agent (4) is an organic powder.

6. Method according to one of Claims 1 to 4, **characterized in that** the agent (4) is an inorganic powder.

7. Method according to Claim 1, **characterized in that** the agent (4) is a liquid.

8. Method according to Claim 7, **characterized in that** the agent (4) is in the form of a suspension, dispersion or solution.

9. Method according to one of Claims 1, 4 to 8, **characterized in that** the agent (4) is fixed permanently in the structure (2).

10. Apparatus for enhancing the read-out accuracy when reading out a code, which is configured as a topographical structure (2) applied to a component (1), according to one of the preceding claims, comprising an optical read-out device (3) and a device (5) for applying an agent (4), by virtue of which the contrast of the structure (2) is enhanced.

11. Apparatus according to Claim 10, **characterized in that** a further device (6) for removing the agent (4) is provided.

12. Apparatus according to Claim 11, **characterized in that** the further device (6) is a suction or blower device.

13. Component (1) having a code which is configured as a topographical structure (2), **characterized in that** an agent (4) which enhances the contrast of the structure (2) is arranged in the structure (2) .

## Revendications

1. Procédé pour améliorer la précision de lecture lors de la lecture d'un code réalisé sous la forme d'une structure topographique (2) qui est montée sur un composant (1), au moyen d'un dispositif de lecture optique (3), dans lequel la structure (2) est munie, avant la lecture, d'un agent (4) permettant d'améliorer le contraste de la structure (2).

2. Procédé selon la revendication 1, **caractérisé en ce que** l'agent (4) est retiré du composant (1) après la lecture du code.

3. Procédé selon la revendication 2, **caractérisé en ce que** l'agent (4) est retiré du composant (1) après la lecture à l'aide d'air comprimé ou d'un dispositif d'aspiration.

4. Procédé selon l'une des revendications 1 à 3, **caractérisé en ce que** l'agent (4) est un solide sous forme de poudre.

5. Procédé selon l'une des revendications 1 à 4, **caractérisé en ce que** l'agent (4) est une poudre organique.

6. Procédé selon l'une des revendications 1 à 4, **caractérisé en ce que** l'agent (4) est une poudre inorganique.

7. Procédé selon la revendication 1, **caractérisé en ce que** l'agent (4) est un liquide.

8. Procédé selon la revendication 7, **caractérisé en ce que** l'agent (4) est réalisé sous la forme d'une suspension, d'une dispersion ou d'une solution.

9. Procédé selon l'une des revendications 1, 4 à 8, **caractérisé en ce que** l'agent (4) est fixé de façon permanente dans la structure (2).

10. Dispositif pour améliorer la précision de lecture lors de la lecture d'un code réalisé sous la forme d'une structure topographique (2) qui est montée sur un composant (1), selon l'une des revendications précédentes, comprenant un appareil de lecture optique (3) et un dispositif (5) destiné à appliquer un agent (4) permettant d'améliorer le contraste de la structure (2) .

11. Dispositif selon la revendication 10, **caractérisé en ce qu'**il est prévu un autre dispositif (6) destiné à retirer l'agent (4).

12. Dispositif selon la revendication 11, **caractérisé en ce que** l'autre dispositif (6) est un dispositif d'aspiration ou de soufflage.

13. Composant (1) comprenant un code réalisé sous la forme d'une structure topographique (2), **caractérisé en ce qu'**un agent (4) permettant d'améliorer le contraste de la structure (2) est disposé dans la structure (2).
